# FASCICULE DE BREVET EUROPEEN

(11) **EP 2 092 380 B1**
(45) Date de publication et mention de la délivrance du brevet: **03.08.2011**
(21) Numéro de dépôt: 07822707.1
(22) Date de dépôt: 19.11.2007
(51) Int. Cl.: G02B 5/22, G02F 1/35

(54) **FILTRE OPTIQUE COMMUTABLE A CRISTAUX PHOTONIQUES**
SCHALTBARES OPTISCHES FILTER MIT PHOTONISCHEN KRISTALLEN
SWITCHABLE OPTICAL FILTER WITH PHOTONIC CRYSTALS

(30) Priorité: 21.11.2006 FR 0610199
(43) Date de publication de la demande: 26.08.2009
(73) Titulaire: Thales, 92200 Neuilly Sur Seine (FR); Universite Paris X, 92001 Nanterre Cedex (FR)
(72) Inventeur: BERGINC, Gérard, 94320 Thiais (FR); BONNEFOIS, Jean-Jacques, 31500 Toulouse (FR); GUIDA, Géraldine, 92410 Ville d'Avray (FR); PRIOU, Alain, 92410 Ville d'Avray (FR)
(74) Mandataire: Henriot, Marie-Pierre
(86) Numéro de dépôt international: PCT/EP2007/062506
(87) Numéro de publication internationale: WO 2008/061961

(56) Documents cités:
- JP-A- 2006 323 231
- US-A1- 2003 189 758
- US-A1- 2007 063 208
- GOLUBEV V G ET AL: "Phase transition-governed opal&ndash" APPLIED PHYSICS LETTERS, AIP, AMERICAN INSTITUTE OF PHYSICS, MELVILLE, NY, US, vol. 79, no. 14, 1 octobre 2001 (2001-10-01), pages 2127-2129, XP012029011 ISSN: 0003-6951
- D.A. MAZURENKO ET AL: "Ultrafast Bragg switching induced by a phase transition in a 3D photonic crystal" PROCEEDINGS OF SPIE, vol. 5450, 2004, pages 250-259, XP002438286 Bellingham, WA
- SHIRK J S: "Protecting the war fighter's vision in a laser-rich battlefield environment" OPTICS & PHOTONICS NEWS OPT. SOC. AMERICA USA, vol. 11, no. 4, 1 avril 2000 (2000-04-01), pages 19-23, XP002476232
- FOI, SWEDISH DEFENCE RESEARCH AGENCY: "Annual Report 2003 of the Division of Sensor Technology" INTERNET ARTICLE, [Online] 2003, pages 1-7, XP002476233 Extrait de l'Internet: URL:http://www.foi.se/upload/omfoi/avdelni ngar/sensorteknik/anual/foi-sensor-tech-20 03.pdf> [extrait le 2008-04-14]
- DANILOV O B ET AL: "Optical limitation of Mid-IR radiation in vanadium dioxide films" TECHNICAL PHYSICS, NAUKA/INTERPERIODICA, MO, vol. 48, no. 1, 1 janvier 2003 (2003-01-01), pages 73-79, XP019314135 ISSN: 1090-6525
- OZBAY E: "LAYER-BY-LAYER PHOTONIC CRYSTALS FROM MICROWAVE TO FAR-INFRARED FREQUENCIES" JOURNAL OF THE OPTICAL SOCIETY OF AMERICA - B, OPTICAL SOCIETY OF AMERICA, WASHINGTON, US, vol. 13, no. 9, septembre 1996 (1996-09), pages 1945-1955, XP000618296 ISSN: 0740-3224

## Description

Le domaine de l'invention est celui de la contre-contre mesure optique ou CCMO face au brouillage voire à la destruction provoqués par des équipements optroniques de contre-mesure ; il concerne la protection des équipements optroniques face à la menace des lasers notamment des lasers agiles en fréquence à très courtes impulsions installés dans ces dispositifs de contre-mesure. On rappelle qu'un laser agile en fréquence est un laser apte à changer rapidement ses fréquences d'émission (typiquement en un laps de temps s'échelonnant de la microseconde à la milliseconde), tout en conservant une fréquence stable pendant l'émission ; il s'agit généralement d'un laser impulsionnel.

Les bandes optiques explorées sont typiquement celles des domaines visible (0,4 - 0,8 µm), proche infrarouge (0,8 - 2 µm) et infrarouge bande II (bande 3 -5 µm) et bande III (bande 8-12 µm).

Les technologies actuelles de protection peuvent être classées en 4 grands groupes.
- Volets mécaniques : c'est le système le plus simple qui peut être positionné en interne ou en externe, mais qui n'est pas efficace contre les lasers impulsionnels. La commande mécanique ne permet pas de positionner suffisamment rapidement la pièce mécanique, la densité optique ou le filtre absorbant lors de l'agression : en effet, la durée de positionnement est supérieure à la milliseconde.
- Filtres fixes : ils utilisent les propriétés de réflexion ou d'absorption des matériaux utilisés et sont centrés autour d'une longueur d'onde. Ils sont utilisables contre les lasers impulsionnels ou continus. Les filtres interférentiels qui forment le concept le plus utilisé pour rejeter les longueurs d'onde indésirables, sont constitués communément de multicouches de matériels diélectriques déposés sur un substrat. Une faible tolérance à l'angle d'incidence de la menace et l'impact de ces filtres sur les performances optiques du système optronique présentent des limitations techniques importantes. De plus, ces filtres ne peuvent répondre au besoin de protection vis à vis des lasers agiles en fréquence.
- Filtres commutables qui utilisent les propriétés de réflexion ou d'absorption de matériaux actifs présentant une bande passante optique contrôlable en fonction du temps. Ils sont utilisables contre les lasers continus ou à impulsions longues. Les matériaux peuvent être électro-actifs. Le temps d'activation est de l'ordre de la micro à la milli-seconde ce qui ne permet pas de répondre correctement au besoin de protection vis-à-vis des lasers agiles en fréquence.
- Limiteurs optiques actifs ou passifs.

Les limiteurs actifs sont déclenchés par une source d'énergie extérieure, une tension électrique par exemple. On peut ainsi construire des valves optiques avec un mélange de composites polymère - cristaux liquides (PDLC ou Polymer Dispersed Liquid Crystal). Le mélange PDLC est homogène et transparent lorsque la tension de commande est appliquée : en effet cette tension de commande permet l'alignement des billes de cristaux liquides. Quand on annule la tension, les billes s'arrangent aléatoirement dans la structure et le matériau devient diffusant. Le système passe ainsi d'un état passant optique à un état bloquant optique. Le temps de réponse est limité par la viscosité du cristal liquide, ce qui correspond aux rotations des molécules.

Les limiteurs dits passifs sont déclenchés par l'impulsion laser, le déclenchement dépendant alors de la puissance laser ; d'autres concepts de limiteurs sont liés aux changements de l'indice de réfraction du matériau dus à l'élévation de température interne.

Les effets non linéaires peuvent se produire dans les liquides, les solides et les gaz. L'exploitation de ces effets permet de concevoir les différents limiteurs.

On rappelle que les différents effets non linéaires sont décrits par un développement en série de Taylor de la polarisabilité optique P en fonction du champ électrique E. Les termes de la série représentent les tenseurs de susceptibilité. Le tenseur de susceptibilité du premier ordre est lié au domaine optique linéaire du matériau, à l'indice linéaire de réfraction, à l'absorption linéaire. Le second ordre du tenseur de susceptibilité inclut les effets photo réfractifs, électro-optiques. Le troisième ordre décrit l'absorption à deux photons, l'absorption saturable. L'absorption à deux photons (ADP) est un effet du troisième ordre au cours duquel il y a passage de l'état fondamental vers l'état excité par absorption simultanée de deux photons de fréquence ω. L'absorption α peut s'écrire dans ce cas α = α ₀+β₀ / où β₀ est le coefficient d'ADP, α₀ est le coefficient d'absorption linéaire du matériau considéré et I est l'éclairement énergétique (en W.m⁻²) associé au champ électromagnétique. En outre, des travaux récents ont mis en évidence que le phénomène d'absorption non-linéaire peut être exalté par des processus d'absorption à l'état excité induits par ADP ; ces effets sont observés à haut flux, et il a pu être établi que le terme de réabsorption à l'état excité est un phénomène prépondérant dans l'absorption non-linéaire.

L'efficacité de ces limiteurs est naturellement liée au seuil de déclenchement du matériau non linéaire. Pour atteindre ces seuils de déclenchement, il est souvent nécessaire de positionner ces limiteurs dans les plans focaux intermédiaires afin d'augmenter artificiellement la focalisation du faisceau laser donc d'augmenter les densités d'énergie par unité de surface.

Des matériaux non linéaires en couches homogènes ou en suspension dans des solutions ont déjà été étudiés.

En bande Visible / PIR, les matériaux suivants en suspension :
CBS (Carbon Black Suspension)
Porphyrine
PDLC

Les suspensions de noir de carbone (CBS) présentent une stabilité limitée qui est liée à sa transmission linéaire. La dilution nécessaire pour obtenir une solution transparente implique une dilution forte, et ceci réduit la stabilité de la solution.

En bande IR II, les matériaux suivants en couches : InAs, VO₂, HgCdTe.

En bande IR III, les matériaux suivants en couches : InSb, VO₂.

Les limiteurs actuels basés sur ces matériaux nécessitent en plus de positionner les limiteurs dans un plan focal intermédiaire, de très fortes intensités pour basculer de l'état passant à l'état bloqué, ce qui implique l'ajout d'optiques coûteuses et encombrantes dans les dispositifs à protéger. Les protections sont rarement large bande, sont sensibles à l'angle d'incidence de la menace (d'où la nécessité de placer le limiteur dans un plan focal intermédiaire) et présentent un contraste insuffisant entre l'état passant (transparent) et l'état bloquant (opaque) : le contraste du coefficient de transmission est par exemple égal à 60/0,05 ; ce contraste est donné en pourcentage de transmission. Des limitateurs optiques sont divulgués dans US 2003/0189758, "Ultra fast Bragg switching induced by a transition in a 3 D photonic crystal", D. A. Mazurenko et al., SPIE vol 5450 and "Phase transition governed opal-VO2 photonic crystal", V.G. Goluber et al, AIP, Vol 79, No 41

Le but de l'invention est de proposer un filtre optique ne présentant pas les inconvénients précités.

Afin d'améliorer ces limiteurs ou filtres non-linéaires, on utilise des cristaux photoniques : ces cristaux artificiels permettent de modifier artificiellement les propriétés optiques des matériaux non linéaires qui constituent ces limiteurs.

Plus précisément l'invention a pour objet un limitateur optique passif tel que défini dans la revendication 1

La distance entre les centres des micro-structures est par exemple invariante.

Avantageusement, les micro-structures sont disposées dans le cristal selon un réseau qui peut être un réseau de mailles cubiques ou hexagonales.

Selon un mode d'exploitation de l'invention, le matériau non linéaire est du VO₂ et le cristal est du Saphir.

Typiquement, les microstructures sont disposées selon 5 à 100 couches, la taille des micro-structures est comprise entre 40 nm et 300 nm et le réseau a un pas compris entre 100 nm et 2 µm.

Selon une caractéristique de l'invention, le filtre présente une largeur de bande comprise entre 3 et 12 µm et plus précisément entre 3 et 5 µm.

L'invention a aussi pour objet un système optronique comportant un tel filtre avantageusement situé dans le plan focal.

Ce système peut être un capteur optronique tel qu'une caméra thermique.

L'invention concerne également un procédé de filtrage optique d'un faisceau laser agile en fréquence au moyen d'un tel filtre.

Selon une caractéristique de l'invention, le filtre est apte à commuter en moins de 10 ns.

Selon une autre caractéristique de l'invention, le laser est un laser impulsionnel.

Le laser a typiquement une longueur d'onde comprise entre 3 et 12 µm.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de filtre selon l'invention,
les figures 2a et 2b représentent schématiquement des formes de mailles du cristal photonique utilisé dans l'invention,
la figure 3 représente schématiquement un exemple de capteur optronique comportant un filtre selon l'invention.

On rappelle que le VO₂ est un oxyde de Vanadium qui possède deux états cristallins distincts. En dessous de 67°C la maille cristalline est monoclinique et correspond à un état semi-conducteur. Au-dessus de 67°C la maille cristalline devient tétragonale et correspond à un état métallique. Les propriétés optiques des deux états sont très différentes. On passe d'un état à faible absorption (indice de réfraction de 3, coefficient d'absorption k de 0,1) à un état très absorbant (indice de 3, absorption k de 6) par un changement de phase très rapide (inférieur à 120 femtosecondes) commandé par la température.

Il ne s'agit ni d'une absorption à deux photons ni d'une non-linéarité de troisième ordre classique mais bien d'un effet thermique ultra-rapide : un effet non-linéaire thermique.

II est utilisé pour des usages de limitations optiques en bande II et III, l'impact laser échauffant le matériau et le faisant passer de l'état transparent à l'état opaque.

Ce type de matériau souffre cependant de deux défauts majeurs.

Premièrement, pour obtenir une atténuation suffisante à l'état opaque, il faut mettre une épaisseur de matériau telle que la transmission à l'état transparent est fortement dégradée : moins de 60% de transmission dans l'état transparent pour garantir d'être en dessous de 5% à l'état opaque.

Deuxièmement, la transition de phase du VO₂ ne se fait de façon rapide (c'est-à-dire en moins de 10ns) que sur les couches superficielles du VO₂. En effet, le VO₂ massif illuminé par un flash laser ne commute de l'état semi-conducteur à l'état métallique que sur une couche superficielle de 200 nm. Tout le VO₂ situé à plus de 200 nm de profondeur n'apporte rien à la transition de phase. L'étude de la carte de champ à l'intérieur de la structure montre que les couches de VO₂ commutent suivant un ordre lié à l'intensité du champ. Le patch de VO₂ situé sur la zone la plus éclairée de la carte de champ bascule le premier et empêche les couches enterrées plus profondément de basculer à leur tour.

La valeur pratique d'atténuation du limiteur est ainsi limitée à celle produite par cette couche mince trop faible pour être utile dans un cas pratique (commutation de la transparence de 80% vers 20%).

Selon l'invention, le cristal photonique permet de modifier les propriétés du matériau non-linéaire tel que le VO₂ et sa réponse à une illumination laser.

L'invention est basée sur l'utilisation de la structure des cristaux photoniques afin d'organiser des micro-structures de VO₂, appelés patchs, pour donner à l'ensemble des qualités optiques non linéaires que n'ont pas le VO₂ massif ni le VO₂ déposé en couches minces comme rappelé ci-dessus.

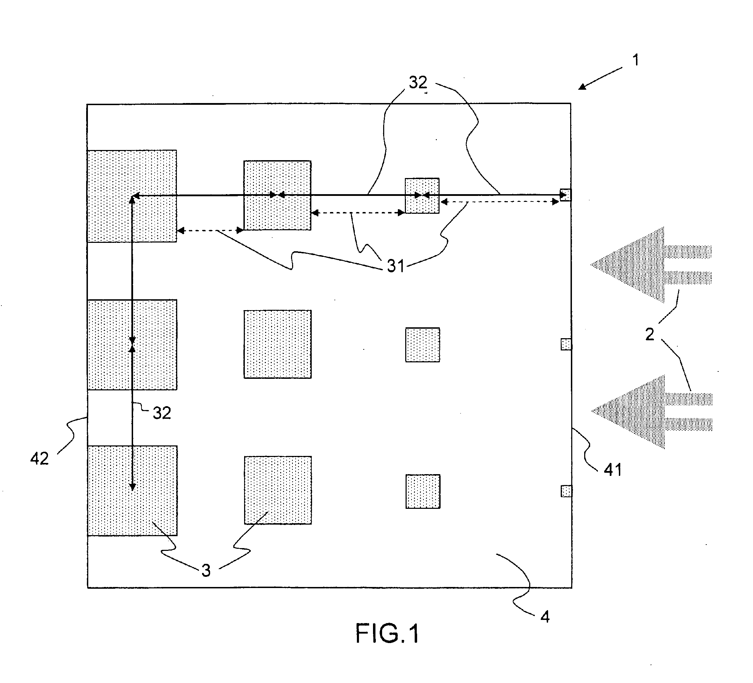

Plus précisément, le filtre optique commutable 1 selon l'invention représenté figure 1, comprend un cristal 4 photonique 3D dans lequel sont disposées des micro-structures 3 du matériau non linéaire, séparées par des couches de cristal.

Selon un premier mode d'exploitation correspondant à celui de la figure 1, les microstructures de VO₂ sont disposées en trois dimensions (3D), en mailles cubiques, séparées par des couches transparentes de cristal. photonique en bande II ou en bande III. La distance 32 entre les centres des micro-structures est invariante. Pour la bande II, le cristal photonique est par exemple du saphir.

Ces microstructures doivent être petites devant les longueurs d'onde envisagées et le taux de remplissage (la quantité de VO₂ contenue par unité de volume) très faible, de l'ordre de quelques %. Ce point permet d'obtenir une forte opacité à l'état bloqué sans sacrifier la transparence à l'état passant.

La taille des microstructures de VO₂ ainsi que leur espacement doit varier lentement d'une couche à l'autre et en respectant un profil précis : les patchs 3 de VO₂ ont une taille croissante au fur et à mesure que l'on s'enfonce dans la structure, à partir de la face du cristal destinée à recevoir le faisceau incident 2, et l'écart 31 entre les couches de patchs de VO₂ se réduit au fur et à mesure que l'on s'enfonce dans la structure du filtre.

Le respect de ces conditions permet d'obtenir les propriétés suivantes :
- la courbe de transmission du filtre est sensiblement uniforme dans la bande spectrale considérée,
- la figure d'interférence créée par le filtre est d'intensité croissante dans les patchs de VO₂ au fur à mesure que l'on progresse vers les couches enterrées. La structure du filtre selon l'invention produit une carte de champ où l'intensité lumineuse maximale se trouve sur la couche la plus profonde, l'intensité immédiatement inférieure se trouve sur l'avant-dernière couche, et ainsi de suite. De cette façon, les couches profondes de VO₂ basculent de l'état semi-conducteur à l'état métallique avant les couches superficielles. On a un effet de cascade où la couche la plus enterrée change d'état juste avant celle qui la précède immédiatement puis, par effet de domino toutes les couches basculent dans l'état métallique depuis le fond jusqu'à la surface de la structure. Le phénomène est en outre très rapide : la totalité de la structure bascule en moins de 10ns.

La structure du filtre possède une caractéristique propre à tous les cristaux photoniques : son comportement spectral est proportionnel à sa taille. Cela revient à dire que si l'on multiplie toutes les dimensions par deux, la réponse spectrale est identique mais pour des longueurs d'onde multipliées par deux.

Dans le cas de la bande 3-5µm, on a par exemple des tailles de patchs variant entre 40 et 300 nm, un pas 32 de maille du réseau variant entre 100 nm et 2 µm, un nombre de couches variant de 5 à 100.

Un filtre dont l'évolution de la taille des microstructures est linéaire et dont le rapport de taille des microstructures entre la première et la dernière couche de VO₂ est de 0,4 donne de bons résultats. Un tel filtre comporte entre cinq et dix couches.

Dans un autre exemple, le cristal photonique à maille carrée, de pas 32 de 300nm, comprend 30 couches séparées par un diélectrique tel que du saphir dont la distance 31 entre patchs de VO₂ est nominalement de 200 nm mais varie lentement d'une couche à l'autre car la taille des patchs diminue. Grâce à cette diminution de la taille, les courbes de transmissions ne contiennent pas d'oscillations ou « ripples ». L'organisation de ces microstructures décrite précédemment permet d'obtenir des transparences en phase passante supérieures à celles du VO₂ massif ou à couches minces sans diminuer l'opacité en phase bloquante. La dynamique du limiteur optique est améliorée : pour l'exemple cité, nous obtenons des coefficients de transmission >90/ <10⁻⁶ au lieu de 60/0,05.

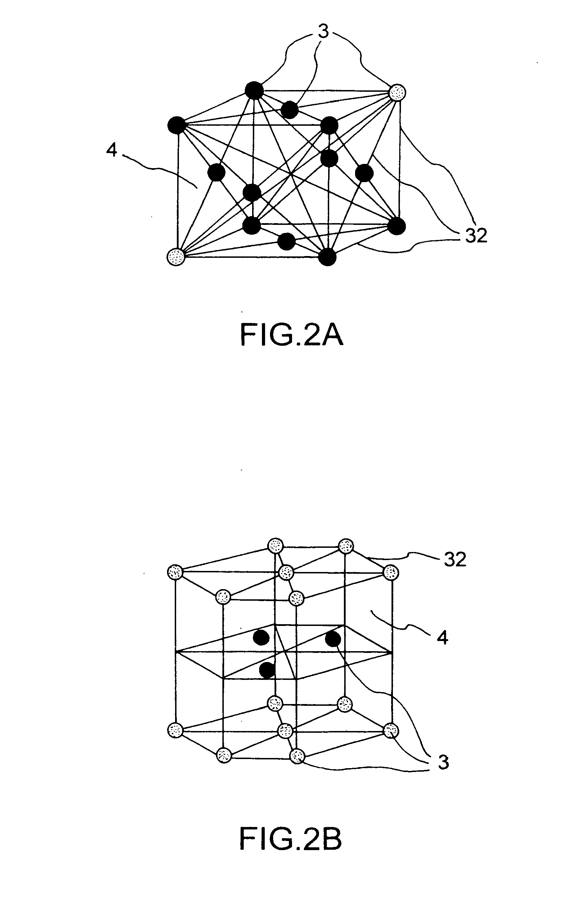

D'autres techniques d'arrangement du réseau 3D correspondant à d'autres modes d'exploitation peuvent être utilisées. On peut avoir :
une maille de réseau cubique centrée telle que celle décrite figure 2a,
une maille non cubique comme par exemple une maille hexagonale telle que celle décrite figure 2b,
voire d'autres formes de mailles,
ou encore, un profil de variation des tailles de patch qui ne soit plus linéaire.

Sur ces figures 2a et 2b, sont représentés les centres des microstructures 3 de VO₂ séparées par du cristal (ou matériau diélectrique) 4, et les arêtes (ou pas de maille) 32 reliant 2 centres de microstructures. Leur taille croissante n'est pas représentée. Les exemples de maille de ces figures comportent 3 couches de VO₂ situées dans les plans suivants :
- deux faces carrées opposées et une face parallèle à mi-distance des précédentes pour la maille cubique centrée de la figure 2a,
- deux faces hexagonales opposées et une face parallèle à mi-distance des précédentes pour la maille hexagonale de la figure 2b.

Ce type d'organisation en cristal photonique permet l'utilisation de la totalité de l'épaisseur du matériau et non seulement la couche superficielle lors de l'impact d'une impulsion laser. Ceci permet à la structure de conserver un grand contraste passant/bloquant même face à une impulsion et donc de s'en protéger, ce que l'utilisation du VO₂ massif ne peut pas assurer car son épaisseur utile reste limitée à 200nm.

Les constantes de temps sont faibles et il en résulte une grande rapidité de commutation. La structure bascule de l'état passant à l'état bloquant en moins de 10ns (5ns la plupart du temps pour une illumination de 600J/m²) lors d'un impact laser. Ceci permet de se protéger contre des impulsions laser de cet ordre de grandeur. Les autres structures de VO₂, massives ou non, ne le permettent pas.

Par analogie avec le comportement de tous les autres cristaux photoniques, la structure a une certaine indépendance vis-à-vis de l'angle d'incidence contrairement à une structure à couche mince.

La bande spectrale utilisable est large et permet de répondre à une menace d'un laser agile en fréquence. La structure utilisée avec du VO₂ permet de couvrir la bande II et la bande III. La structure reste valable pour toute longueur d'onde par simple changement d'échelle, seul le choix du matériau optique incluant les patchs peut s'opposer à une utilisation depuis le visible jusqu'à l'infrarouge lointain.

Le filtre obtenu peut être placé dans le plan focal, le plan focal intermédiaire devenant inutile.

On a pris l'exemple du VO₂ utilisable dans les bandes II et III. Cette invention s'applique à d'autres types de matériaux ayant des propriétés équivalentes dans des bandes optiques différentes, tels que les nanoagrégats de matériaux à transition de phase isolant métal, les matériaux à structure pérovskite tels que les nickelates de terre rare.

Le filtre selon l'invention peut être installé dans un système optronique susceptible d'être soumis à des agressions lasers issues par exemple de dispositifs de leurre ou de contre mesure optronique. Ce système est typiquement un capteur optronique notamment une caméra thermique, mesurant directement ou indirectement la chaleur produite par le rayonnement incident à détecter. Le domaine spectral de sensibilité d'une telle caméra thermique est situé dans l'infrarouge.

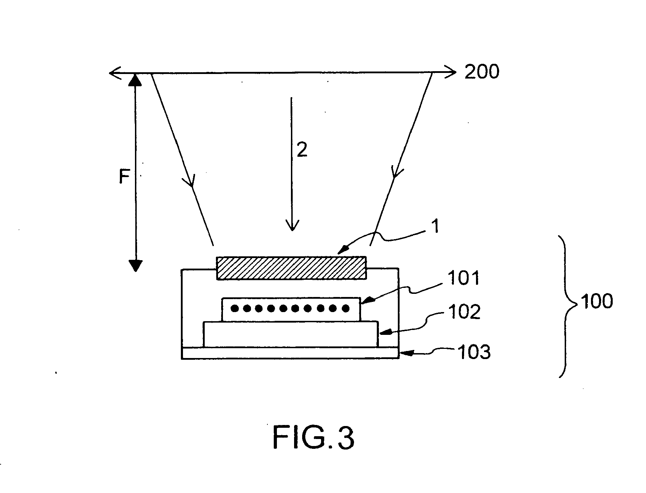

On a représenté figure 3 un exemple de capteur optronique comportant une lentille 200 et un filtre 1 selon l'invention situé à la distance focale F de la lentille et destiné à recevoir un faisceau incident 2. Le filtre est disposé sur le détecteur 100 qui comprend un plan focal 101, un circuit de lecture 102 et une puce de détection 103.

Le filtre selon l'invention comporte un ensemble de couches comprenant des réseaux périodiques de micro-structures du matériau non-linéaire considéré (VO₂ par exemple) et des matériaux diélectriques transparents (saphir par exemple). Ce type de filtre peut être placé près du plan focal de détection comme dans l'exemple de la figure 3.

Une technologie potentielle de fabrication de ce cristal photonique consiste à fabriquer chaque plan du cristal indépendamment et ensuite d'assembler le cristal photonique. Chaque plan du cristal est constitué d'une couche de matériau diélectrique (saphir par exemple) sur laquelle on fabrique directement les microstructures de matériau non linéaire. Quatre étapes majeures s'imposent dans ce procédé de fabrication.

La première étape est le dépôt d'une résine sur le substrat le saphir par exemple), la seconde étape est la lithographie qui consiste à transférer le motif de microstructures sur la résine, une technique de lithographie directe étant par exemple l'écriture par faisceau d'électrons. Cette technique est la plus utilisée pour des motifs de petites dimensions (typiquement de quelques dizaines de nanomètres). Une fois la partie de la résine attaquée par la lithographie, il est alors nécessaire de graver les microstructures dans le substrat en suivant le motif inscrit dans la résine, ce qui constitue la troisième étape du procédé. Le type de procédé le plus adapté à la gravure de motifs submicroniques est la gravure sèche de type Gravure par plasma (Plasma Etching), ou la gravure de type RIE (Reactive Ion Etching). La dernière étape comprend le dépôt du matériau non-linéaire et l'enlèvement de la résine. Le matériau remplit les microstructures gravées et recouvre la résine non attaquée ; il ne reste plus qu'à enlever la résine non attaquée, ce qui est obtenu en pratique en plongeant par exemple le substrat dans de l'acétone.

Le procédé est répliqué pour chaque plan du cristal photonique ; il suffit ensuite d'assembler les différentes couches obtenues pour obtenir le cristal photonique.

## Revendications

1. Limiteur optique passif (1) à cristal photonique destiné à recevoir un faisceau laser incident (2), comportant un matériau non linéaire et apte à commuter dans une bande optique prédéterminée, d'un état transparent à un état opaque en fonction de la puissance du faisceau incident, **caractérisé en ce que** le matériau non linéaire est un matériau non linéaire à transition de phase isolant métal, qu'il comprend des microstructures dudit matériau disposées dans un matériau diélectrique (4) 3D transparent dans ladite bande optique, de manière à former des couches du matériau diélectrique avec micro-structures (3) disposées en réseaux périodiques, en alternance avec des couches dudit matériau diélectrique sans microstructures, les microstructures étant séparées les unes des autres d'au moins 100 nm et **en ce que** le matériau diélectrique présentant une face (41) avant destinée à recevoir le faisceau incident et une face arrière (42), la taille des micro-structures est croissante et la distance (31) les séparant décroissante lorsque l'on va de la face avant vers la face arrière.

2. Limiteur optique passif selon la revendication précédente, **caractérisé en ce que** la distance (32) entre les centres des micro-structures est invariante.

3. Limiteur optique passif selon l'une des revendications précédentes, **caractérisé en ce que** la taille des micro-structures croît linéairement.

4. Limiteur optique passif selon l'une des revendications précédentes, **caractérisé en ce que** les microstructures sont disposées selon un réseau de mailles cubiques ou hexagonales.

5. Limiteur optique passif selon la revendication précédente, **caractérisé en ce que** le matériau diélectrique est du Saphir.

6. Limiteur optique passif selon l'une des revendications précédentes, **caractérisé en ce que** le matériau à transition de phase isolant métal est un matériau à structure pérovskite ou du V02.

7. Limiteur optique passif selon l'une des revendications précédentes, **caractérisé en ce que** les microstructures sont disposées selon 5 à 100 couches, la taille des micro-structures est comprise entre 40 nm et 300 nm, le réseau est périodique et a un pas compris entre 100 nm et 2 µm.

8. Limiteur optique passif selon l'une des revendications 1 à 6 prise en combinaison avec la revendication 3, **caractérisé en ce que** les microstructures sont disposées selon 5 à 10 couches, et **en ce que** le rapport de taille des microstructures est de 0,4 entre la 1^{ère} et dernière couche.

9. Système optronique comportant un limiteur optique passif (1) selon l'une des revendications précédentes.

10. Système optronique selon la revendication précédente comportant un plan focal (101), **caractérisé en ce que** le limiteur optique passif (1) est situé sur le plan focal.

11. Système optronique selon l'une des revendications 9 ou 10, **caractérisé en ce que** ce système optronique est une caméra thermique.

12. Procédé de limitation optique d'un faisceau laser agile en fréquence au moyen d'un limiteur optique passif (1) selon l'une des revendications 1 à 8.

13. Procédé de limitation optique selon la revendication précédente, **caractérisé en ce que** le laser (2) est un laser impulsionnel.

14. Procédé de limitation optique selon l'une des revendications 12 ou 13, **caractérisé en ce que** le laser (2) a une longueur d'onde comprise entre 3 et 12 µm.

## Claims

1. A photonic crystal passive optical limiter (1) designed to receive an incident laser beam (2), comprising a non-linear material and designed to switch, in a pre-determined optical band, from a transparent state to an opaque state as a function of the power of the incident beam, **characterised in that** the non-linear material is a non-linear metal insulator phase transition material, **in that** it comprises micro-structures of said material arranged in a 3D dielectric material (4) that is transparent in said optical band, so as to form layers of said dielectric material with micro-structures (3) arranged in periodic networks, alternating with layers of said micro-electric material without micro-structures, said micro-structures being separated from each other by a distance of at least 100 nm and **in that**, as the dielectric material has a front surface (41) designed to receive the incident beam and a rear surface (42), the size of the micro-structures increases and the distance (31) that separates them decreases in the front surface to the rear surface direction.

2. The passive optical limiter according to the preceding claim, **characterised in that** the distance (32) between the centres of the micro-structures is invariant.

3. The passive optical limiter according to any one of the preceding claims, **characterised in that** the size of the micro-structures increases linearly.

4. The passive optical limiter according to any one of the preceding claims, **characterised in that** the micro-structures are arranged in a network of cubic or hexagonal meshes.

5. The passive optical limiter according to the preceding claim, **characterised in that** the dielectric material is sapphire.

6. The passive optical limiter according to any one of the preceding claims, **characterised in that** the metal insulator phase transition material has a perovskite or V02 structure.

7. The passive optical limiter according to any one of the preceding claims, **characterised in that** the micro-structures are arranged in 5 to 100 layers, the size of the micro-structures is between 40 nm and 300 nm, the network is periodic and has a pitch of between 100 nm and 2µ m.

8. The passive optical limiter according to any one of claims 1 to 6 in combination with claim 3, **characterised in that** the micro-structures are arranged in 5 to 10 layers and **in that** the size ratio of the micro-structures is 0.4 between the first and the last layer.

9. An optronic system comprising a passive optical limiter (1) according to any one of the preceding claims.

10. The optronic system according to the preceding claim, comprising a focal plane (101), **characterised in that** the passive optical limiter (1) is located on the focal plane.

11. The optronic system according to claim 9 or 10, **characterised in that** said optronic system is a thermal camera.

12. A process for optically limiting a frequency agile laser beam by means of a passive optical limiter (1) according to any one of claims 1 to 8.

13. The optical limiting process according to the preceding claim, **characterised in that** the laser (2) is a pulsed laser.

14. The optical limiting process according to claim 12 or 13, **characterised in that** the laser (2) has a wavelength of between 3 and 12 µm.

## Patentansprüche

1. Passiver optischer Begrenzer (1) mit photonischen Kristallen zum Empfangen eines eingehenden Laserstrahls (2), umfassend ein nichtlineares Material und so ausgelegt, dass er in einem vorbestimmten optischen Band von einem transparenten Zustand in einen opaken Zustand in Abhängigkeit von der Leistung des einfallenden Strahls umschalten kann, **dadurch gekennzeichnet, dass** das nichtlineare Material ein nichtlineares Metallisolator-Phasenübergangsmaterial ist, dass es Mikrostrukturen des Materials umfasst, die in einem dielektrischen 3D-Material (4) angeordnet sind, das in dem optischen Band transparent ist, um Schichten des dielektrischen Materials mit in periodischen Netzwerken angeordneten Mikrostrukturen (3) zu bilden, die mit Schichten des mikroelektrischen Materials ohne Mikrostrukturen abwechseln, wobei die Mikrostrukturen um wenigstens 100 nm voneinander beabstandet sind, und **dadurch**, dass, wenn das dielektrische Material eine Frontfläche (41) zum Empfangen des eingehenden Strahls und eine Rückfläche (42) aufweist, die Größe der Mikrostrukturen zunimmt, und der sie trennende Abstand (31) in der Richtung von der Frontfläche zur Rückfläche abnimmt.

2. Passiver optischer Begrenzer nach dem vorherigen Anspruch, **dadurch gekennzeichnet, dass** der Abstand (32) zwischen den Mittelpunkten der Mikrostrukturen unveränderlich ist.

3. Passiver optischer Begrenzer nach einem der vorherigen Ansprüche, **dadurch gekennzeichnet, dass** die Größe der Mikrostrukturen linear zunimmt.

4. Passiver optischer Begrenzer nach einem der vorherigen Ansprüche, **dadurch gekennzeichnet, dass** die Mikrostrukturen in einem Netzwerk von kubischen oder hexagonalen Maschen angeordnet sind.

5. Passiver optischer Begrenzer nach dem vorherigen Anspruch, **dadurch gekennzeichnet, dass** das dielektrische Material Saphir ist.

6. Passiver optischer Begrenzer nach einem der vorherigen Ansprüche, **dadurch gekennzeichnet, dass** das Metallisolator-Phasenübergangsmaterial eine Perovskit- oder V02-Struktur hat.

7. Passiver optischer Begrenzer nach einem der vorherigen Ansprüche, **dadurch gekennzeichnet, dass** die Mikrostrukturen in 5 bis 100 Schichten angeordnet sind, wobei die Größe der Mikrostrukturen zwischen 40 nm und 300 nm liegt, das Netzwerk periodisch ist und eine Teilung zwischen 100 nm und 2 µm hat.

8. Passiver optischer Begrenzer nach einem der Ansprüche 1 bis 6 in Kombination mit Anspruch 3, **dadurch gekennzeichnet, dass** die Mikrostrukturen in 5 bis 10 Schichten angeordnet sind, und **dadurch**, dass das Größenverhältnis der Mikrostrukturen 0,4 zwischen der ersten und der letzten Schicht beträgt.

9. Optronisches System, das einen passiven optischen Begrenzer (1) nach einem der vorherigen Ansprüche umfasst.

10. Optronisches System nach dem vorherigen Anspruch, das eine Fokalebene (101) umfasst, **dadurch gekennzeichnet, dass** sich der passive optische Begrenzer (1) auf der Fokalebene befindet.

11. Optronisches System nach einem der Ansprüche 9 oder 10, **dadurch gekennzeichnet, dass** das optronische System eine Wärmebildkamera ist.

12. Verfahren zum optischen Begrenzen eines frequenzagilen Laserstrahls mittels eines passiven optischen Begrenzers (1) nach einem der Ansprüche 1 bis 8.

13. Verfahren zum optischen Begrenzen nach dem vorherigen Anspruch, **dadurch gekennzeichnet, dass** der Laser (2) ein pulsierter Laser ist.

14. Verfahren zum optischen Begrenzen nach einem der Ansprüche 12 oder 13, **dadurch gekennzeichnet, dass** der Laser (2) eine Wellenlänge zwischen 3 und 12 µm hat.
